# EUROPEAN PATENT SPECIFICATION

(11) **EP 4 041 636 B1**
(45) Date of publication and mention of the grant of the patent: **14.12.2022**
(21) Application number: 20838617.7
(22) Date of filing: 16.12.2020
(51) Int. Cl.: B65B 7/16, B65B 29/02, B65B 51/22, B65B 61/06, B29C 65/00, B26F 1/38, B29C 65/74, B26F 1/44, B26D 7/18, B29C 65/08, B29C 65/18, B29C 69/00, B29L 31/00

(54) **APPARATUS AND METHOD FOR CUTTING AND JOINING A SHEET ELEMENT TO A CONTAINER**
VORRICHTUNG UND VERFAHREN ZUM SCHNEIDEN UND VERBINDEN EINES BLATTARTIGEN ELEMENTS MIT EINEM BEHÄLTER
DISPOSITIF ET PROCEDE DE COUPE ET D'ASSEMBLAGE D'UN ELEMENT EN FORME DE FEUILLE A UN RECIPIENT

(30) Priority: 18.12.2019 IT 201900024571
(43) Date of publication of application: 17.08.2022
(73) Proprietor: Sarong Societa' Per Azioni, 42046 Reggiolo (RE) (IT)
(72) Inventor: BARTOLI, Andrea, 19031 Ameglia (La Spezia) (IT); CAPITINI, Davide, 19031 Ameglia (La Spezia) (IT)
(74) Representative: Persi, Patrizia
(86) International application number: PCT/IB2020/062028
(87) International publication number: WO 2021/124151

(56) References cited:
- CN-A- 108 454 973
- DE-A1-102007 027 389
- DE-A1-102016 218 218
- US-A1- 2004 206 048

## Description

The present invention relates to an apparatus and a method for cutting off and joining a sheet element to a container.

In particular, the present invention finds advantageous application in an apparatus and in the relative method for cutting off and joining a sheet element, such as a closing element, to a base wall of a casing of a container such as a capsule for beverages as well as for cutting off and joining a sheet element, such as a covering element, to a flanged edge of the casing, to which reference will be made without losing generality. Containers for food products which are sealed so as to hermetically contain the product, at the same time extending the life time thereof and maintaining the organoleptic properties thereof are known.

Among them, capsules for beverage that can be used on automatic dispensing machines are increasingly widespread.

These capsules are disposable and single-dose containers comprising an outer casing in the shape of a glass or cup. The casing usually has a base wall and a side wall defining an open cavity that can contain the initial product, for example ground coffee or tea, from which the final product, for example the beverage, is obtained.

A flanged edge extends radially from the side wall and is arranged around the open cavity, on the opposite side with respect to the base wall. The cavity is hermetically closed by a covering element, fixed to the flanged edge, so as to seal the initial product inside the container.

The base wall of the capsule can have an opening delimited by an edge region to which a closing element can be fixed.

The base wall of the capsule can also have a central region, and a groove, interposed between the edge region and the central region. The central region and the edge region can extend on respective planes which are offset with respect to each other along a longitudinal axis of the capsule and, in this case, the closing element can be fixed to the edge region and to the central region on different planes.

The capsule must be pierceable to allow the introduction of liquid under pressure, typically water, and the delivery of the coffee beverage obtained. For example, the capsule can be used in a dispensing machine in which the closing element is pierceable by an injection device of the dispensing machine, which can have piercing blades shaped so to be housed in the groove, and wherein the covering element is pierceable by an extraction device.

Both the covering element and the closing element are produced by means of a pierceable sheet element, so that the capsule can be used with great flexibility of use in the dispensing machines of interest.

Cutting off and joining apparatuses are known in order to produce the capsule, that is, to fix the covering element to the base wall and to fix the covering element to the flanged edge and which are configured to cut off the sheet element from a sheet material and subsequently to join the cut off element to the respective wall to which it is to be applied.

The sheet material is usually fed by a web wound on a reel and is flexible in the sense that it is a thin film, for example of a compostable material or of aluminium.

The apparatus may comprise an operating unit comprising a joining device and a cutting device, the cutting edge of which surrounds the joining device. In particular, the joining device and the cutting device can be tubular and can be arranged coaxial with respect to a movement axis with respect to which the operating unit and the container can move between a spaced condition, in which the sheet material is interposed therebetween and is spaced therefrom, and a joined condition, in which the joining device is configured to join the sheet material to the container.

The cutting device can be configured to translate together with the joining device along the movement axis and to translate also with respect to the joining device with respect to this axis.

In a first step, the operating unit and the container can be in a spaced condition, in order to be able to interpose the sheet material therebetween. In a second step, the cutting device can be advanced through the sheet material to cause the cutting edge to cut the sheet element. At the end of the cut, the cut off sheet element remains blocked inside the cutting device.

In a third step, the joining device can be advanced to accompany the cut element by guiding it until it engages with the wall of interest to which it is to be joined. The joining device can subsequently join the cut element, for example, by heat sealing or by ultrasonic welding.

The join of the sheet element to the container by means of the apparatus and the method described above can be imprecise if the sheet element, retained inside the tubular cutting device, does not remain in the ideal position but moves, given the flexibility and the consistency of the sheet material itself. If the sheet element is joined imprecisely to the container wall, the resulting container is defective and must be discarded as it cannot be used.

Cutting off and joining apparatuses forming part of the state of the art are known and are cited hereinafter by way of example.

Document US 2004/206048 shows an apparatus for sealing containers which comprises a welding head for welding a peripheral edge portion of a lid to an internal surface of a tapered body of a container. The welding head is provided with a face that can be inserted inside said internal surface.

Document CN 108454973 discloses a film processing method and apparatus comprising pressing, cutting and welding in which the apparatus comprises a punching and welding device comprising a punching tool and a heated head, wherein the heated head is installed in a movable manner in the punching tool.

Document DE 102007027389 shows a method for welding a film to an opening of a container.

Document DE 102016218218 shows a unit for connecting two parts and forming a container, wherein the device comprises a matrix and a pressing device and is provided with a cutting punch and a welding punch.

The object of the present invention is to provide an apparatus and a method for cutting off and joining a sheet element to a container which solves the problems of the prior art.

Still another object of the present invention is to provide an apparatus and a method for cutting off and joining a sheet element to a container by means of which it is possible to obtain containers of good quality which have a sheet element placed in the correct position.

A further object of the present invention is to provide an apparatus and a method for cutting off and joining a closing element to a casing of a capsule for beverages which guarantees a correct cutting off of the closing element from a sheet material and also a correct joining of the closing element to a base wall of the casing of the capsule.

These tasks are achieved by a cutting off and joining apparatus and method in accordance with the present invention, comprising the technical characteristics set out in one or more of the appended claims.

Further characteristics and advantages of the present invention will become more apparent from the approximate and thus non-limiting description of a preferred, but not exclusive, embodiment of a cutting off and joining apparatus and method, as illustrated in the accompanying drawings, in which:
Figure 1 is a schematic sectional view of an apparatus for cutting and joining a sheet element to a wall of a container, for example to an edge region of a base wall of a casing of a capsule for beverages, in a non-operating step, in which the apparatus comprises an operating unit and a container which are in a spaced condition, and a retaining device, which is in a non-operating position and is configured to retain a sheet material interposed between the operating unit and the container;
Figure 2 is a schematic sectional view of the apparatus of Figure 1, in a preparation step, in which the operating unit and the container are in the spaced condition of Figure 1, the operating unit comprises a joining device and a cutting device, the retaining device being in a tensioning position in which the sheet material is moved away from a cutting edge of the cutting device;
Figure 3 is a schematic sectional view of the apparatus of Figure 1, in a joining step, subsequent to the preparation step, in which the operating unit and the container are in a joined condition in which the joining device joins the sheet material to the container, and the retaining device is in the tensioning position of Figure 2;
Figure 4 is a schematic sectional view of the apparatus of Figure 1, in an initial cutting step, subsequent to the joining step, in which the operating unit and the container are in the joined condition in which the joining device continues to join the sheet material to the container and the retaining device is in an initial cutting position, in which the sheet element begins to be cut on the cutting edge of the cutting device as it intercepts it, during the movement of the retaining device from the tensioning position to the initial cutting position;
Figure 5 is a schematic sectional view of the apparatus of Figure 1, in a cutting step, subsequent to the initial cutting step, in which the operating unit and the container are still in the joined condition and the retaining device is in a cutting position, the sheet element having been cut on the cutting edge during the movement of the retaining device from the tensioning position to the cutting position;
Figure 5a is a schematic sectional view of an enlargement of the apparatus of Figure 5, in which the cut sheet element, the joining device and the cutting device are shown;
Figure 6 is a schematic view of a version of the apparatus of Figures 1 to 5a, configured to cut and join a sheet element to both the edge region and an inner region of a base wall of a capsule for beverages, in which the apparatus is in the non-operating step;
Figure 7 is a schematic view of the apparatus of Figure 6, in the preparation step;
Figure 8 is a schematic view of the apparatus of Figure 6, in the joining step;
Figure 9 is a schematic view of the apparatus of Figure 6, in the initial cutting step;
Figure 10 is a schematic view of the apparatus of Figure 6, in the cutting step.

In the following description, the same elements are indicated with the same reference numbers in the various figures.

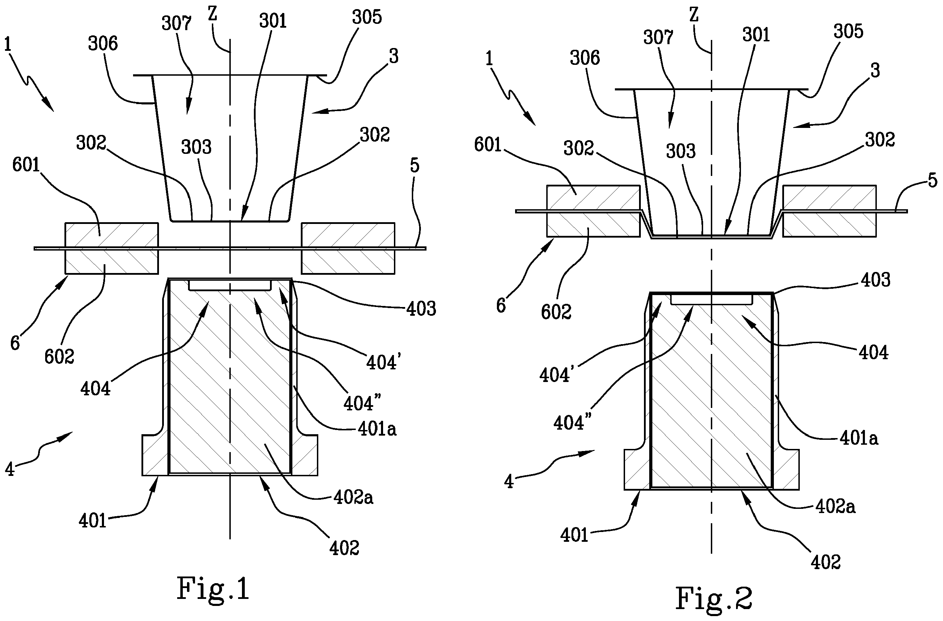

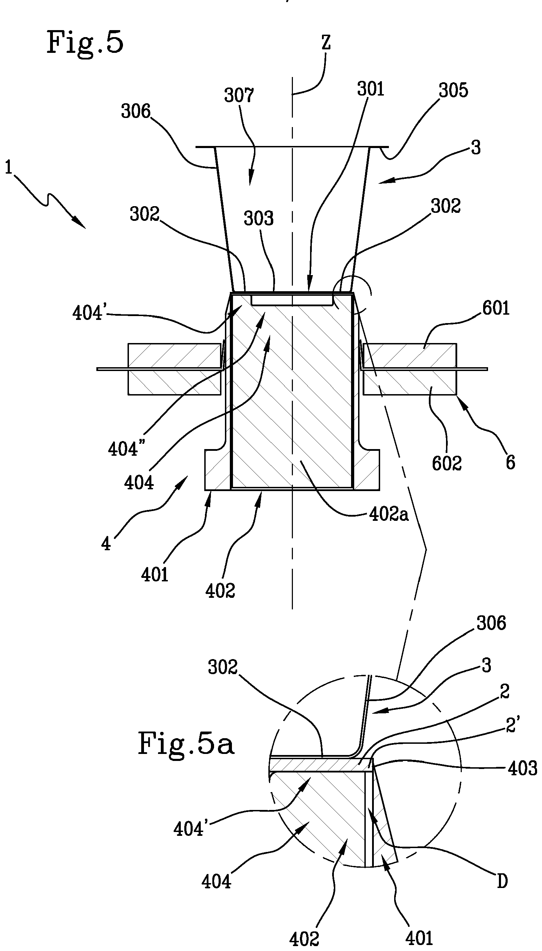

Figures 1 to 5 and Figure 5a show an apparatus 1 for cutting off and joining a sheet element 2 to a container 3.

For example, the apparatus 1 is configured to cut off and join a sheet element 2, as a closing element, to a base wall 301 of a casing of a container 3 such as a capsule for beverages, as well as to cut off and join a sheet element 2, such as a covering element, to a flanged edge 305 of the casing of the capsule 3, to which reference will be made without losing generality.

A capsule for beverages is, in fact, a disposable and single-dose container 3 comprising the casing in the shape of a glass or cup. The casing has the base wall 301 and a side wall 306 defining a cavity 307 which can contain an initial product, not illustrated, for example ground coffee or tea, from which to obtain a final product, not illustrated, by introducing a liquid under pressure, for example water, into the capsule 3.

The flanged edge 305 extends radially from the side wall 306 and is arranged around the cavity 307, on the opposite side with respect to the base wall 301. The cavity 307 can be hermetically closed by a further element, not illustrated, which is the covering element, which can be fixed to the flanged edge 305, so as to seal the initial product inside the container 3.

The base wall 301 of the capsule 3 can have an edge region 302 to which the closing element can be fixed to seal the base wall 301 of the capsule 3 itself, which can delimit an inner region 303, which can be a central opening, not illustrated.

The apparatus 1 comprises an operating unit 4 which in turn comprises a cutting device 401 and a joining device 402.

The cutting device 401 is configured to cut the sheet element 2 from a sheet material 5, the joining device 402 is configured to join the sheet element 2 to the container 3.

Preferably, the sheet material 5 is a continuous web (not illustrated) which is unwound from a reel (not illustrated). However, it is specified that the sheet material 5 could also be a segment of continuous web previously cut which is fed already cut into segments to the apparatus 1, between the operating unit 4 and the container 3.

Sheet material 5 means a flexible film, with a thickness comprised between 0.02 mm and 0.25 mm, for example equal to 0.05 mm, preferably made of aluminium, and/or of a compostable material, for example PLA, and/or or of a biodegradable and/or compostable material other than PLA, and/or paper.

The cutting device 401 comprises a cutting edge 403 which surrounds the joining device 402.

The operating unit 4 and the container 3 are movable with respect to one another along a movement axis Z between:
- a spaced condition, in which the sheet material 5 can be interposed between the operating unit 4 and the container 3 and is, in particular, spaced therefrom, and
- a joined condition, in which the joining device 402 is configured to join the sheet material 5 to the container 3.

The apparatus 1 further comprises a retaining device 6, configured to retain the sheet material 5 during the joining and the cut.

In the joined condition, the cutting device 401 is configured to remain fixed relative to the joining device 402 and the retaining device 6 is configured to move along the Z axis between a tensioning position and a cutting position, the sheet element 2 being cut on the cutting edge 403 from the sheet material 5 during the movement of the retaining device 6 from the tensioning position to the cutting position.

Thanks to the presence of the retaining device 6, which is movable between the tensioning position and the cutting position, the cutting device 401 and the joining device 402 can remain fixed with respect to one another in the joined condition not only during the joining of the sheet material 5 to the container 3, for example to the base wall 301, but also during the cut of the sheet element 2 from the sheet material 5.

The joining time is therefore increased and, advantageously, by increasing the joining time, also the stability and quality of the join between the sheet element 2 and the container 3, for example between the sheet element 2 and the base wall 301 of the container 3, is increased.

It is added that cutting off is advantageously carried out after joining, when the sheet material 5 has already been joined to the container 3 and this increases the quality of the cutting off itself.

The joining device 402 can be, for example, a heat-sealing or ultrasonic welding device.

In the case of a heat sealing device, by increasing the joining time, it is possible to adjust the heat sealing device to a lower temperature with a consequent improvement of the stability of the weld itself.

In addition, thanks to the fact that the cutting device 401 is fixed and not movable relative to the joining device 402, the container 3 is not damaged during the separation of the sheet element 2 from the sheet material 5 since, when the operating unit 4 and the container 3 are in the joined condition, the cutting edge 403 is kept at a distance from the container 3 itself.

Along the movement axis Z, in the joined condition a joined position is defined in which the sheet material 5 is joined to the container 3.

It should be noted that the movement axis Z is also an axis of symmetry for container 3.

With respect to the joined position, the tensioning position is arranged along the movement axis Z on the side of the container 3, the sheet material 5 being initially moved away from the cutting edge 403 towards the container 3 by the retaining device 6.

Thanks to this, the sheet material 5 is not damaged by the presence of the cutting device 401, since the cutting edge 403 is kept at a distance also from the sheet material 5.

As is evident in Figure 2, the retaining device 6 in the tensioning position is configured to wrap the sheet material 5 about the base wall 301.

If, in a manner not illustrated, the apparatus 1 is configured to cut off and join the sheet element 2 to a flanged edge 305 of the casing of the capsule 3 to form the covering element, then the retaining device 6 in the retaining position is configured to wrap the sheet material 5 about said flanged edge 305.

Therefore, with respect to the base wall 301 of the container 3, the tensioning position is arranged along the axis Z beyond the base wall 301, on the side of the container 3.

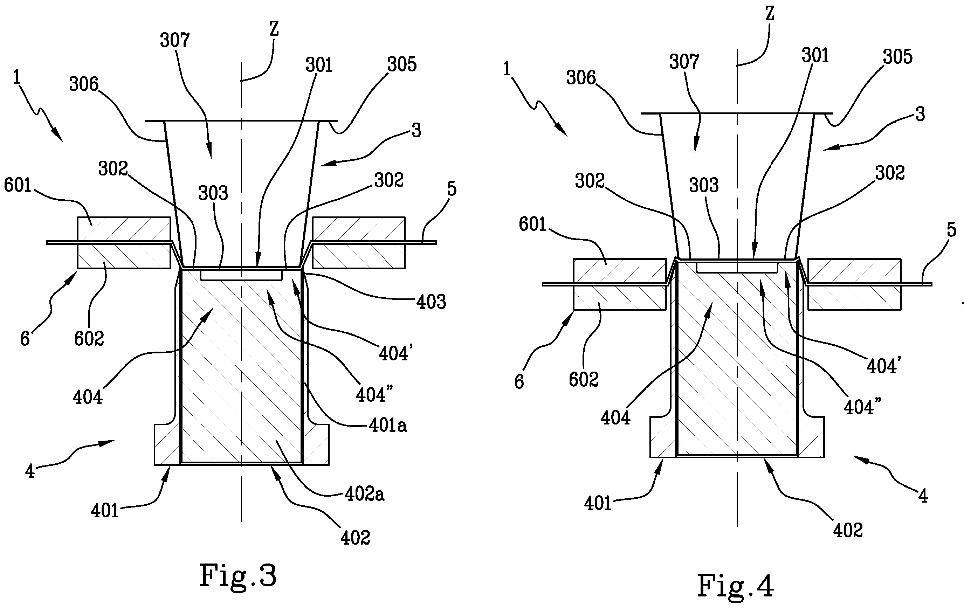

If, as illustrated in Figure 3, it is the operating unit 4 that moves towards the container 3, which is kept stationary, the joined position corresponds, along the axis Z, to the position of the base wall 301 of the container 3. However, this is not necessary, as we will see later.

Advantageously, during the wrapping about the base wall 301, the retaining device 6 is able to put the sheet material 5 under tension to prevent creases from being created which would damage, as we will see later, the joining of the sheet material 5 to the base wall 301.

With respect to the joined position, the cutting position is arranged along the axis Z on the side of the operating unit 4. It should therefore be noted that the joined position is interposed between the tensioning position and the cutting position. In this way, the retaining device 6 can move starting from the side of the container 3 towards the operating unit 4, to cause the sheet material 5, initially moved away from the cutting edge 403, to intercept the latter to be cut.

If, for example, the movement axis Z is vertical and the operating unit 4 is arranged below the container 3 as shown in Figures 1 to 10, the retaining device 6 puts the sheet material 5 under tension in the tensioning position which is far higher than the joined position and lowers (Figures 2 and 3) to the cutting position (Figure 5) to cut the sheet material 5, since the cutting position is far lower than the joined position and the retaining position.

It is specified that what has been said previously may remain valid even if, according to a variant not shown, the operating unit 4 is arranged above the container, or, according to another variant not shown, the movement axis Z is not vertical but, for example, is horizontal.

As shown in Figures 1 and 2, the retaining device 6 is configured to move into the tensioning position from a non-operating position, in which the sheet material 5 is retained interposed between the operating unit 4 and the container 3 arranged in the spaced condition, before the operating unit 4 and/or the container 3 move into the joined condition.

In other words, the retaining device 6 is configured to move into the tensioning position in a preparation step that precedes the joining step, in order to wrap the sheet material 5 about the base wall 301 of the container 3 and to put the sheet material 5 under tension.

It should be noted that the cutting device 401 and the joining device 402 are configured to move solidly between the spaced condition and the joined condition.

In other words, the cutting device 401 and the joining device 402 can be fixed to each other and move solidly. Alternatively, the cutting device 401 and the joining device 402 can be movable between them independently but in such a way as to move solidly so that, in the joined condition, they are solidly fixed together.

For this purpose, the apparatus 1 can comprise a movement unit, not illustrated, which can comprise respective movement devices configured to move the cutting device 401 and the joining device 402 solidly between them, or to move independently but solidly respectively the cutting device 401 and the joining device 402 as previously mentioned.

According to an alternative version, not shown, the apparatus 1 can also comprise an abutment device, for example a spindle, which can be configured to be arranged inside the container 3. The abutment device can comprise an abutment head configured to be housed in the cavity 307 so as to engage the side wall 306 and the base wall 301 of the container 3, retaining the container 3 in the joined condition.

In other words, the abutment head can be configured to provide an abutment support to the joining device 402, pushing the base wall 301 towards the joining device 402 in the joined condition when the sheet material 5 is interposed therebetween, to further improve the joining of the sheet material 5 to the base wall 301.

According to a variant not shown, it is the operating unit 4 that remains stationary and it is the container 3 that moves towards the operating unit 4, supported and retained by the abutment device. In this case, the joined position corresponds, along the axis Z, to the position of a head end 404 of the joining device.

The apparatus can comprise a further movement device configured to move the abutment device, when the latter retains the container 3, between the spaced condition and the joined condition.

The apparatus 1 can comprise another movement device for moving the retaining device 6 between the non-operating position, the tensioning position and the cutting position described above.

If it is the operating unit 4 that remains stationary and it is the container 3 that moves towards it in the joined condition, the tensioning device 6 is configured to move into the tensioning position in the preparation step described above, in order to wrap the sheet material 5 about the base wall 301 of the container 3 and put it under tension.

Subsequently, the retaining device 6, arranged in the tensioning position, is configured to move solidly with the container 3, retained and moved by the abutment device, so that the sheet material 5 wrapped about the base wall 301 can contact the joining device 402 in the joined condition.

In this case, the further movement device of the abutment device and the other movement device of the retaining device 6 are configured to move the container 3 and the retaining device 6, respectively, solidly between them.

According to a further variant, not shown, the operating unit 4 and the container 3 can both be movable from the spaced condition to the joined condition, without any of them remaining stationary. In this case, the movement unit of the operating unit 4, the further movement device of the abutment device and the other movement device of the retaining device 6 are configured so as to coordinate the different movements.

The retaining device 6 comprises two plates 601, 602 surrounding the operating unit 4 and the container 3. In detail, the plates 601 and 602 are facing one another, and in particular are annular.

The plates 601, 602 are movable along the movement axis Z between a retained condition, in which they are neared to one another and are configured to retain the sheet material 5, as illustrated in Figures 1 to 10, and a moved-away condition (not illustrated) in which they are spaced and the sheet material 5 can be fed between the operating unit 4 and the container 3.

The other movement device can also be configured to move the plates 601, 602 between the moved-away condition and the retained condition. When the plates 601, 602 are in the retained condition in which they retain the sheet material 5, they are configured to be both movable simultaneously at least between the non-operating position, the tensioning position and the cutting position detailed above.

It should be noted that the joining device 402 comprises a cylindrical body 402a and the cutting device 401 comprises an annular body 401a, arranged concentrically with the cylindrical body 402a.

Between the cylindrical body 402a of the joining device 402 and the annular body 401a of the cutting device 401, as shown in Figure 5a, there is a distance D which generates an outer flap 2' not welded in the sheet element 2 which is free, in the sense that it is not joined to the base wall 301.

Advantageously, the distance D can also be reduced to a minimum, or be equal to 0 to keep the cutting device 401 in contact with the joining device 402, so that the outer flap 2' is as small as possible.

The cylindrical body 402a has a head end 404 configured to engage with the base wall 301 of the container. The head end 404 comprises an outer zone 404' for example annular, and an inner zone 404' for example circular, which is surrounded by the outer zone 404' and is recessed with respect to the outer zone 404'.

The outer zone 404', for example planar, is configured to join the sheet material 5 to a corresponding edge region 302 of the base wall 301 of the container 3, which lies on a plane.

This plane can be transverse to the movement axis Z, for example perpendicular.

In the joined condition, the outer zone 404' is configured to abut against said plane and define, along the axis Z, the joined position.

The cutting edge 403 is substantially coplanar with respect to the outer zone 404'.

In other words, as illustrated in Figure 5a, the cutting edge 403 can project from the outer zone 404' by a minimum height which is at least equal to the thickness of the sheet material 5 which is to be cut. Since the thickness of the sheet material can also be, as mentioned above, a few hundredths of a mm, i.e. equal to 0.05 mm, the cutting edge 403 can project from the outer zone 404' by a minimum height, for example equal to 0.05 mm, which does not interfere with the side wall 306 on which the sheet material 5 is to be joined.

However, according to a version not shown, the outer zone 404' can project with respect to the cutting edge 403. In other words, the cutting edge 403 can be further set back with respect to the outer zone 404' to further ensure that the cutting edge 403 does not interfere with the side wall 306. In fact, when the retaining device 6 moves from the side of the container 3 towards the operating unit 4 into the cutting position, the sheet material 5 is capable of equally intercepting the cutting edge 403 to cut the sheet element 2 from the sheet material 5, even if the cutting edge 403 is further set back with respect to the outer zone 404' by a respective further suitable height.

The inner zone 404" is shaped in such a way as to ensure that, in the inner zone 404" the sheet material 5 is not joined to the base wall 301 of the container 3 if joining in the corresponding inner region 303 is to be avoided since the opening described above may for example be present. In the case where the joining device 402 is a heat sealing device, the head end 404 of the cylindrical body 402a is configured to be heated. Therefore, the outer zone 404' can abut against the edge region 302 of the base wall 301 while, on the contrary, the inner zone 404" must be distant from a corresponding inner region 303 of the base wall 301 to avoid abutting against it.

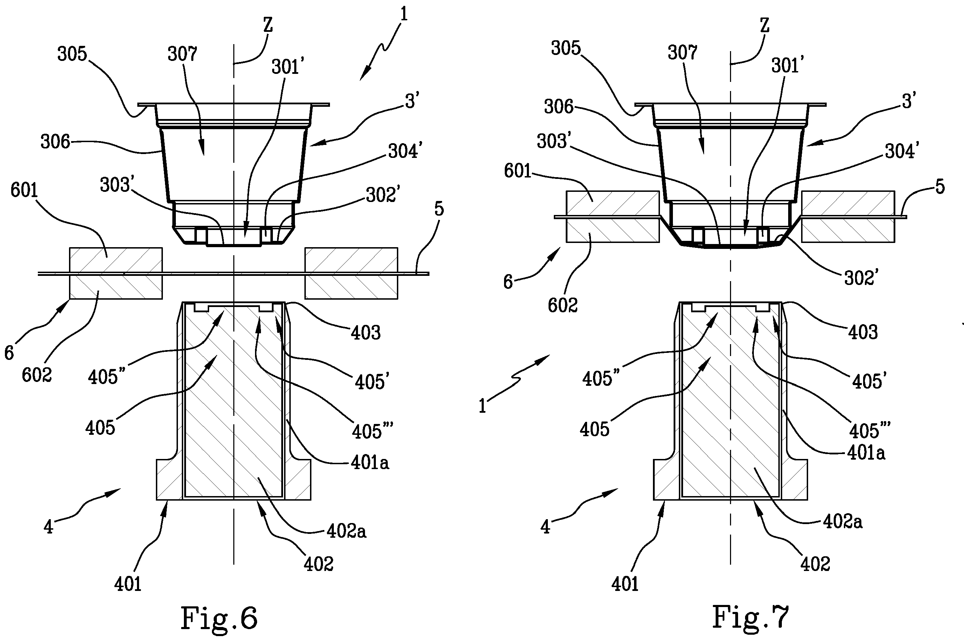

As shown in Figures 6 to 10, the container 3' can alternatively also be a capsule for beverages which comprises a cup-shaped casing, which differs from the casing of Figures 1 to 5 in that it has a base wall 301' which is a variant of the base wall 301. The base wall 301' of the container 3' is not planar but comprises an edge region 302' in particular located on a plane, an inner region 303' located on a further plane, a groove 304' interposed between the edge region 302' and the inner region 303', the inner region 303' being projecting with respect to the edge region 302'. The base wall 301' is, in other words, on two levels.

The sheet element 2 must be joined to the edge region 302' and to the inner region 303' to realise the closing element of the base wall 301'.

It should therefore be noted that the cylindrical body 402a of the joining device 402 has a head end 405 which differs from the head end 404 of Figures 1 to 5 in that it has an outer zone 405', for example planar, which is configured to join the sheet material 5 to the corresponding edge region 302' of the base wall 301' of the container 3' located on said plane. The head end 405 additionally comprises an inner zone 405" which is configured to join the sheet material 5 to the inner region 303' located on the further plane, projecting with respect to said plane.

In this case, both the outer zone 405' and the inner zone 405" are configured to abut against the edge region 302' and the inner region 303', respectively.

In the joined condition, the joined position is still identified along the movement axis Z by the outer zone 405' which abuts against the plane on which the edge region 302' lies.

If the joining device is a heat-sealing device, it should be noted that both the outer zone 405' and the inner zone 405" are configured to be heated.

What has been said previously remains valid for what concerns the cutting edge 403, which can project with respect to the outer zone 405' by a minimum height equal to the thickness of the sheet material 5, or be recessed therefrom by a suitable height. The cutting edge 403 is therefore substantially coplanar with respect to the outer zone 405'.

Between the outer zone 405' and the inner zone 405" the head end 405 comprises an annular recess 405‴ which is more recessed than the inner zone 405" to ensure that in the annular recess 405‴ the sheet element 2 is not joined to the base wall 301' of the container 3' and can be arranged inclined between the edge region 302' and the inner region 303' so as to cover the groove 304'.

The annular recess 405‴ can be adjacent to the inner zone 405".

Advantageously, if above all the sheet material 5 is to be joined to the container 3' having the base wall 301' with two levels, the retaining device 6 can put the sheet material 5 under tension in the tensioning position to prevent undesired creases in the sheet material 5 itself from occurring, which could jeopardize the correct joining thereof on the edge region 302' and the inner region 303'.

In accordance with the present invention, a method for cutting off and joining a sheet element 2 to a container is also described, which for example can be the capsule 3 of Figures 1 to 5 or the capsule 3' of Figures 6 to 10, which comprises following steps:
- providing an operating unit 4 comprising a cutting device 401 and a joining device 402 and providing the cutting device 401 with a cutting edge 403 which surrounds the joining device 402;
- moving the operating unit 4 and the container 3, 3' with respect to one another along a movement axis Z between a spaced condition, in order to interpose between them the sheet material 5, and a joined condition, in order to join the sheet material 5 to the container 3, 3' in a joining step;
- retaining the sheet material 5 during the joining and the cut by means of a retaining device 6; and wherein during the joining step, the method comprises the step of
- keeping the cutting device 401 fixed with respect to the joining device 402,
- cutting the sheet element 2 from the sheet material 5 on the cutting edge 403 moving the retaining device 6 from a tensioning position to a cutting position in a cutting step.

The joining step therefore precedes the cutting step but does not stop during the cutting step, which is performed within the joining step. The latter can be as long as possible and guarantee, as already detailed above, a more stable and precise joining of the sheet element 2 to a base wall 301, 301' of the container 3, 3'.

Thanks to the step of keeping the cutting device 401 fixed during the joining step, any interaction between the cutting edge 403 and the container 3, 3' is avoided.

Along the movement axis Z, the joined condition defines a joined position in which the sheet material 5 is joined to the container 3, 3'.

The method further comprises the step of arranging the retaining device 6 on the side of the container 3, 3' with respect to the joined position, in a preparation step, to move the sheet material 5 away from the cutting edge 403 before the cutting step and to wrap the sheet material 5 about the wall of the container 3, 3'. The retaining device 6 can thus be moved into the tensioning position.

This allows the sheet material 5 to be put under tension so as to avoid unwanted creases from occurring during the subsequent joining step and at the same time ensures that the sheet material 5 is not cut by the cutting edge 403 during the joining step of the sheet material 5 itself.

The step of moving the retaining device 6 into the tensioning position comprises moving the sheet material 5 from the side of the container 3, 3' and wrapping the sheet material 5 about a base wall 301, 301' of the container 3, 3'.

The step of moving the retaining device 6 into the cutting position comprises moving the sheet material 5 from the side of the operating unit 4 with respect to the joined position so that the retaining device 6 moves the sheet material 5 from the side of the container 3, 3' to the side of the operating unit 4, in order to cut the sheet material 5.

The method further comprises the step of arranging the retaining device 6 in a non-operating position to retain the sheet material 5 interposed between the operating unit 4 and the container 3; 3' and moving the retaining device 6 from the non-operating position to the tensioning position when the operating unit 4 and the container 3, 3' are in the spaced condition.

In other words, the method provides the preparation step, which precedes the joining step when the operating unit 4 and the container 3, 3' are still in the spaced condition, in which the retaining device 6 prepares the sheet material 5, by tensioning it around the base wall 301, 301' of the container 3, 3' moving from the non-operating position to the tensioning position.

The joining step comprises providing a head end 404, 405 provided with an outer zone 404', 405' and with an inner zone 404" 405" surrounded by the outer zone 404' 405', with a cylindrical body 402a of the joining device 402 and defining the joined position by means of the outer zone 404', 405' which joins the sheet material to an edge region 302, 302' of a base wall 301, 301' of the container 3, 3' located on a plane and optionally joining the sheet material 5 also to the inner region 303' located on a further plane, by means of the inner zone 405".

It should therefore be noted that the method of the present invention provides joining the closing element to the edge region 302, 302' of the base wall 301, 301' located on said plane and optionally the step of joining the closing element also to the inner region 303' of the base wall 301 located on the further plane.

The method of the present invention can also be advantageously used to cut off and join a covering element, not illustrated, to a flanged edge 305 of the casing of a capsule 3, 3' for beverages.

In other words, this method can be advantageously used to join a sheet element 2 to the capsule 3, 3' in which the sheet element 2 can be a covering element to be joined to the flanged edge 305 or a closing element to be joined to the base wall 301, 301'.

In use, if we now consider Figures 1 to 5 and figures 6 to 10, we are going to list in sequence the operation of the apparatus 1 and the relative steps of the method described above.

In the non-operating step of Figure 1 and Figure 6, the container 3, 3' and the operating unit 4 are in the spaced condition and, after the sheet material 5 has been fed between them, the plates 601, 602 of the retaining device 6 which were in the moved-away condition, move into the retaining condition to retain between them the sheet material 5. In the retaining condition, the retaining device 6, i.e. the plates 601, 602 which retain the sheet material 5, are arranged in the non-operating position to retain the sheet material 5 interposed between the operating unit 4 and the container 3 , 3'.

Subsequently, in the preparation step of Figure 2 and Figure 7, the container 3, 3' and the operating unit 4 are still in the spaced condition, but the retaining device 6 has moved along the movement axis Z into the tensioning position, beyond the base wall 301, 301' of the container 3, 3' to wrap the sheet material 5 about the base wall 301, 301' and to put the sheet material 5 itself under tension.

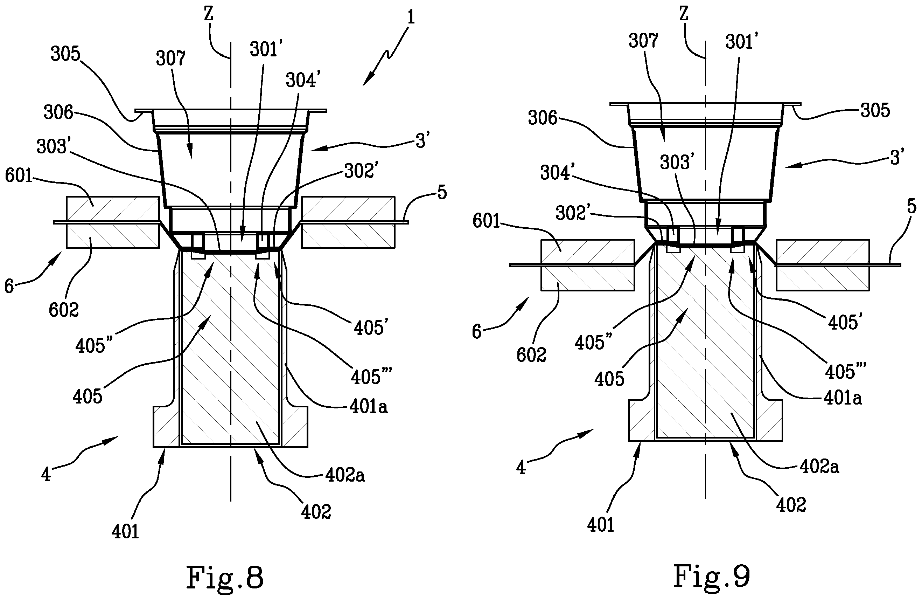

Subsequently, in the joining step of Figure 3 and Figure 8, the operating unit 4, i.e. the cutting device 401 and the joining device 402, move solidly towards the container 3, 3' in the joined condition and the joining device 402 joins the sheet material 5 to the container 3, 3'. While the operating unit 4 is in the joined condition, the retaining device 6 is still in the tensioning position to move the sheet material 5 away from the cutting edge 403 of the cutting device 401.

In detail, the outer zone 404, 405' of the head end 404, 405 of the joining device 402, joins the sheet material 5 to the edge region 302, 302' of the capsule 3, 3' for example by abutting against it and defining the joined position along the movement axis Z.

In Figure 3, the inner zone 404" is recessed and ensures that, in the inner zone 404" the sheet material 5 is not joined to the base wall 301 of the container.

In Figure 8, the inner zone 405" joins the sheet material 5 to the inner region 303' of the base wall 301' of the container 3' located on a further plane.

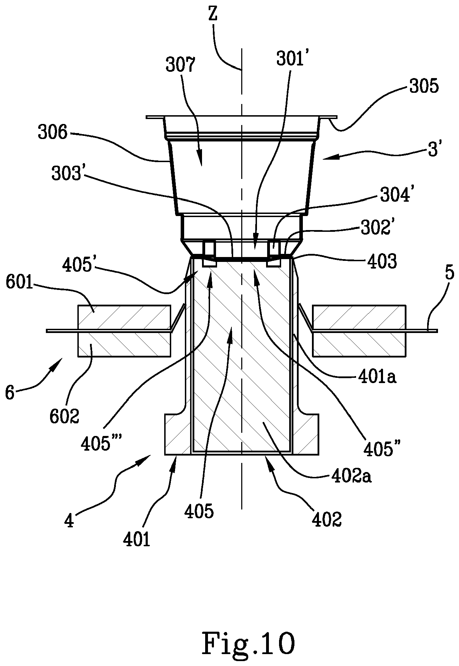

Subsequently, in the cutting step of Figures 4, 5 and 9, 10, while the operating unit 4 is still in the joined condition, the retaining device 6 moves from the tensioning position to the cutting position to ensure that the sheet material 5 initially intercepts the cutting edge 403 of the cutting device 401, as shown in Figures 4 and 9, and subsequently cuts the sheet element 2 from the sheet material 5, as shown in Figures 5 and 10.

It should therefore be noted that the apparatus and the method in accordance with the present invention allow a sheet element 2 to be cut off and joined from a sheet material 5 in a simple and economical way ensuring high quality of the container 3, 3' resulting therefrom. The joining step precedes the cutting step and this guarantees a longer duration of the joining time and a cut off of the sheet material 5 when the sheet material 5 is already joined to the container 3, 3' with a consequent guarantee that the joining and the subsequent cut off is performed without defects.

It may also be advantageously possible to provide a machine, not illustrated, which comprises a plurality of welding and cutting off apparatuses as described above. The machine can be configured to cut off and join sheet elements 2 to respective containers 3, 3' which can still be joined together and obtained by thermoforming a suitable further sheet material.

The machine can comprise a plurality of operating units 4, each associated with the respective container 3, 3' which can for example be joined together solidly and moved simultaneously by the movement unit. The machine can also comprise a pair of platters provided with a plurality of through openings suitably sized, each associated with the respective container 3, 3' in which an annular portion, which defines a relative retaining device 6, is defined around each opening. The pair of platters can be moved by the other movement device to simultaneously move the plurality of retaining devices 6 between the tensioning position and the cutting position.

In this way, in a simple and effective way, it is possible to have a machine capable of cutting off and joining a plurality of sheet elements to respective containers 3, 3'.

## Claims

1. An apparatus (1) for cutting off and joining a sheet element (2) to a container (3, 3'), the apparatus (1) comprising:
- an operating unit (4) comprising a cutting device (401) and a joining device (402), wherein the cutting device (401) comprises a cutting edge (403) which surrounds the joining device (402); wherein
- the operating unit (4) and the container (3, 3') are movable with respect to one another along a movement axis (Z) between a spaced condition, in which a sheet material (5) is interposed therebetween and is spaced therefrom, and a joined condition, in which the joining device (402) is configured to join the sheet material (5) to the container (3; 3'); wherein the apparatus (1) additionally comprises:
- a retaining device (6), configured to retain the sheet material (5) during the joining and the cut; and wherein the apparatus (1) is **characterised in that** in the joined condition
- the cutting device (401) is configured to remain fixed relative to the joining device (402), and
- the retaining device (6) is configured to move along the axis (Z) from a tensioning position to a cutting position, the sheet element (2) being cut on the cutting edge (403) from the sheet material (5) during the movement of the retaining device (6) from the tensioning position to the cutting position.

2. The apparatus according to claim 1, wherein the tensioning position is arranged along the axis (Z) on the side of the container (3, 3'), the sheet material (5) being moved away from the cutting edge (403) towards the container (3, 3') in the tensioning position.

3. The apparatus according to claim 2, wherein the container (3, 3') has a base wall (301, 301') on which the sheet element (2) is to be joined, the retaining device (6) being configured to wrap the sheet material (5) about the base wall (301; 301') when it is in the tensioning position.

4. The apparatus according to one of claims 1 to 3, wherein in the joined condition a joined position is defined in which the sheet material (5) is joined to the container (3; 3'), and wherein the cutting position is arranged along the axis (Z) on the side of the operating unit (4), the joined position being interposed between the tensioning position and the cutting position so that the retaining device (6) moves the sheet material (5) from the container side (3; 3') towards the operating unit (4) in order to cut the sheet material (5) and obtain the cut sheet element (2).

5. The apparatus according to one of the preceding claims, wherein when the operating unit (4) and the container (3, 3') are in the spaced condition and before the operating unit (4) and the container (3, 3') move into the joined condition, the retaining device (6) is configured to move into the tensioning position from a non-operating position, configured to retain the sheet material (5) interposed between the operating unit (4) and the container (3, 3') and spaced therefrom.

6. The apparatus according to one of the preceding claims, wherein the cutting device (401) and the joining device (402) are configured to move solidly between the spaced condition and the joined condition.

7. The apparatus according to one of the preceding claims, wherein the retaining device (6) comprises a pair of plates (601, 602) surrounding the operating unit (4) and the container (3), which are facing one another and, in particular, are annular; and optionally wherein the plates (601, 602) are movable along the axis (Z) between a retained condition, in which they are neared and are configured to retain the sheet material (5) during the joining step and cutting step, and a moved-away condition in which they are spaced and the sheet material (5) can be fed between the operating unit (4) and the container (3, 3').

8. The apparatus according to one of the preceding claims, wherein the joining device (402) comprises a cylindrical body (402a) and the cutting device (401) comprises an annular body (401a) arranged concentrically to the cylindrical body (402a).

9. The apparatus according to claim 8, wherein the cylindrical body (402a) comprises a head end (404; 405) provided with an outer zone (404'; 405'), for example annular, and an inner zone (404"; 405"), for example circular, which is surrounded by the outer zone (404'; 405'), and is recessed with respect to the outer zone (404'; 405'), wherein the outer zone (404'; 405') is configured to join the sheet material (5) to an edge region (302; 302') of the base wall (301; 301') of the container (3; 3'), which is positioned on a plane; and optionally wherein the cutting edge (403) projects from the outer zone (404'; 405') by a height equal to a thickness of the sheet material (5).

10. The apparatus according to claim 9, wherein the inner zone (404") is shaped to prevent joining the sheet material (5) to an inner region (303) of the base wall (301) of the container (3).

11. The apparatus according to claim 10, wherein the inner zone (405") is configured to join the sheet material (5) to an inner region (303') of the base wall (301') of the container (3'), which is positioned on a further plane, projecting with respect to said plane; and optionally wherein between the outer zone (405') and the inner zone (405") the head end (405) comprises an annular recess (405‴), more recessed with respect to the inner zone (405"), which is shaped to prevent joining the sheet material (5) to the base wall (301') of the container (3').

12. A method for cutting off and joining a sheet element (2) to a container (3, 3'), which comprises following steps
- providing an operating unit (4) comprising a joining device (402) and a cutting device (401), wherein the cutting device (401) comprises a cutting edge (403) which surrounds the joining device (402);
- moving the operating unit (4) and the container (3) with respect to one another along a movement axis (Z) between a spaced condition, in order to interpose between them, spaced, the sheet material (5), and a joined condition, in order to join the sheet material (5) to the container (3; 3'), in a joining step;
- retaining the sheet material (5) during the joining and the cut by means of a retaining device (6); the method being **characterised in that** in the joined condition, it comprises the step of
- maintaining the cutting device (401) fixed with respect to the joining device (402),
- cutting the sheet element (2) from the sheet material (5) on the cutting edge (403) by moving the retaining device (6) from a tensioning position to a cutting position in a cutting step.

13. The method according to claim 12, and comprising a step of arranging the retaining device (6) in the tensioning position, on the side of the container (3; 3') with respect to the joined condition, in a preparation step, to move the sheet material (5) away from the cutting edge (403) before the cutting step and to wrap the sheet material (5) around a base wall (301; 301') of the container (3; 3').

14. The method according to claim 12 or 13, wherein moving the retaining device (6) towards the cutting position comprises defining a joined position in which the sheet material (5) is joined to the container (3; 3'), moving the sheet material (5) from the side of the operating unit (4) with respect to the joined position, so that the retaining device (6) moves the sheet material (5) from the side of the container towards the operating unit (4), in order to cut the sheet material (5).

15. The method according to one of claims 12 to 14, and comprising the step of arranging the retaining device (6) in a non-operating position in order to retain the sheet material (5) interposed between the operating unit (4) and the container (3, 3') and of moving the retaining device (6) from the non-operating position to the tensioning position when the operating unit (4) and the container (3, 3') are in the spaced condition.

16. The method according to one of claims 12 to 15, wherein the sheet element (2) is a closing element for closing a base wall (301; 301') of a cup-shaped casing of a capsule for beverages and the method comprises the step of joining the sheet material (5) to an edge region (302; 302') of the base wall (301; 301'), in particular located on a plane and subsequently cutting the sheet element (2) from the sheet material (5); and optionally wherein the method comprises a step of joining the sheet material (5) also to an inner region (303') of the base wall (301') located on a further plane; or wherein the sheet element (2) is a covering element for covering a flanged edge (305) of a cup-shaped casing of a capsule (3; 3') for beverages and the method comprises the step of joining the sheet material (5) to the flanged edge (305).

## Patentansprüche

1. Vorrichtung (1) zum Schneiden und Verbinden eines blattartigen Elements (2) mit einem Behälter (3, 3'), wobei die Vorrichtung (1) umfasst:
- eine Arbeitseinheit (4), umfassend eine Schneidvorrichtung (401) und eine Fügevorrichtung (402), wobei die Schneidvorrichtung (401) eine Schneidkante (403) umfasst, welche die Fügevorrichtung (402) umgibt; wobei
- die Arbeitseinheit (4) und der Behälter (3, 3') relativ zueinander entlang einer Bewegungsachse (Z) beweglich sind zwischen einem voneinander beabstandeten Zustand, in dem ein Flächenmaterial (5) dazwischen angeordnet und davon beabstandet ist, und einem Fügezustand, in dem die Fügevorrichtung (402) dafür konfiguriert ist, das Flächenmaterial (5) mit dem Behälter (3; 3') zu verbinden; wobei die Vorrichtung (1) zusätzlich umfasst:
- eine Haltevorrichtung (6), die dafür konfiguriert ist, das Flächenmaterial (5) während des Verbindens und des Schneidens festzuhalten; und wobei die Vorrichtung (1) **dadurch gekennzeichnet ist, dass** in dem Fügezustand
- die Schneidvorrichtung (401) dafür konfiguriert ist, relativ zu der Fügevorrichtung (402) fixiert gehalten zu bleiben, und
- die Haltevorrichtung (6) dafür konfiguriert ist, sich entlang der Achse (Z) von einer Spannstellung in eine Schneidstellung zu bewegen, wobei das blattartige Element (2) auf der Schneidkante (403) aus dem Flächenmaterial (5) ausgeschnitten wird, während sich die Haltevorrichtung (6) aus der Spannstellung in die Schneidstellung bewegt.

2. Vorrichtung nach Anspruch 1, wobei die Spannstellung entlang der Achse (Z) auf der Seite des Behälters (3, 3') angeordnet ist, wobei das Flächenmaterial (5) in der Spannstellung von der Schneidkante (403) weg zum Behälter (3, 3') hin bewegt ist.

3. Vorrichtung nach Anspruch 2, wobei der Behälter (3, 3') eine Bodenwand (301, 301') aufweist, auf der das blattartige Element (2) anzubringen ist, wobei die Haltevorrichtung (6) dafür ausgelegt ist, das Flächenmaterial (5) um die Bodenwand (301; 301') zu hüllen, wenn sie sich in der Spannstellung befindet.

4. Vorrichtung nach einem der Ansprüche von 1 bis 3, wobei in dem Fügezustand eine Fügestellung definiert ist, in der das Flächenmaterial (5) mit dem Behälter (3; 3') verbunden ist, und wobei die Schneidstellung entlang der Achse (Z) auf der Seite der Arbeitseinheit (4) angeordnet ist, wobei die Fügestellung zwischen der Spannstellung und der Schneidstellung angeordnet ist, so dass die Haltevorrichtung (6) das Flächenmaterial (5) von der Seite des Behälters (3; 3') zu der Arbeitseinheit (4) hin bewegt, um das Flächenmaterial (5) zu schneiden und das geschnittene blattartige Element (2) zu erhalten.

5. Vorrichtung nach einem der vorhergehenden Ansprüche, wobei, wenn sich die Arbeitseinheit (4) und der Behälter (3, 3') in dem voneinander beabstandeten Zustand befinden und bevor sich die Arbeitseinheit (4) und der Behälter (3, 3') in den Fügezustand bewegen, die Haltevorrichtung (6) dafür konfiguriert ist, sich aus einer Außerbetriebsstellung in die Spannstellung zu bewegen, die dafür konfiguriert ist, das Flächenmaterial (5) zwischen der Arbeitseinheit (4) und dem Behälter (3, 3') angeordnet und von diesen beabstandet zu halten.

6. Vorrichtung nach einem der vorhergehenden Ansprüche, wobei die Schneidvorrichtung (401) und die Fügevorrichtung (402) dafür ausgelegt sind, sich einteilig zwischen dem voneinander beabstandeten Zustand und dem Fügezustand zu bewegen.

7. Vorrichtung nach einem der vorhergehenden Ansprüche, wobei die Haltevorrichtung (6) ein Paar Platten (601, 602) umfasst, die die Arbeitseinheit (4) und den Behälter (3) umgeben, einander zugewandt sind und insbesondere ringförmig sind; und wobei optional die Platten (601, 602) entlang der Achse (Z) beweglich sind zwischen einem Haltezustand, in dem sie einander angenähert und dafür ausgelegt sind, das Flächenmaterial (5) während des Fügeschrittes und Schneideschrittes festzuhalten, und einem abgerückten Zustand, in dem sie voneinander beabstandet sind und das Flächenmaterial (5) zwischen der Arbeitseinheit (4) und dem Behälter (3, 3') zugeführt werden kann.

8. Vorrichtung nach einem der vorhergehenden Ansprüche, wobei die Fügevorrichtung (402) einen zylindrischen Körper (402a) umfasst und die Schneidvorrichtung (401) einen ringförmigen Körper (401a) umfasst, der konzentrisch zu dem zylindrischen Körper (402a) angeordnet ist.

9. Vorrichtung nach Anspruch 8, wobei der zylindrische Körper (402a) ein Kopfende (404; 405) umfasst, das eine äußere Zone (404'; 405') umfasst, die beispielsweise ringförmig ist, und eine innere Zone (404"; 405") umfasst, die beispielsweise kreisförmig ist, und die von der äußeren Zone (404'; 405') umgeben wird und relativ zu der äußeren Zone (404'; 405') vertieft ist, wobei die äußere Zone (404'; 405') dafür konfiguriert ist, das Flächenmaterial (5) mit einem Randbereich (302; 302') der Bodenwand (301; 301') des Behälters (3; 3') zu verbinden, der auf einer Ebene angeordnet ist; und wobei optional die Schneidkante (403) von der äußeren Zone (404'; 405') um eine Höhe hervorsteht, die einer Dicke des Flächenmaterials (5) entspricht.

10. Vorrichtung nach Anspruch 9, wobei die innere Zone (404") derart geformt ist, dass das Verbinden des Flächenmaterials (5) mit einem inneren Bereich (303) der Bodenwand (301) des Behälters (3) verhindert wird.

11. Vorrichtung nach Anspruch 10, wobei die innere Zone (405") dafür konfiguriert ist, das Flächenmaterial (5) mit einem inneren Bereich (303') der Bodenwand (301') des Behälters (3') zu verbinden, der auf einer weiteren Ebene positioniert ist, die von der genannten Ebene hervorsteht; und wobei optional zwischen der äußeren Zone (405') und der inneren Zone (405") das Kopfende (405) eine ringförmige Aussparung (405‴) umfasst, die relativ zu der inneren Zone (405") noch mehr vertieft ist, und die derart geformt ist, dass das Verbinden des Flächenmaterials (5) mit der Bodenwand (301') des Behälters (3') verhindert wird.

12. Verfahren zum Schneiden und Verbinden eines blattartigen Elements (2) mit einem Behälter (3, 3'), folgende Schritte umfassend:
- Bereitstellen einer Arbeitseinheit (4), umfassend eine Fügevorrichtung (402) und eine Schneidvorrichtung (401), wobei die Schneidvorrichtung (401) eine Schneidkante (403) umfasst, welche die Fügevorrichtung (402) umgibt;
- Bewegen der Arbeitseinheit (4) und des Behälters (3) relativ zueinander entlang einer Bewegungsachse (Z) zwischen einem voneinander beabstandeten Zustand, um dazwischen, davon beabstandet, das Flächenmaterial (5) anzuordnen, und einem Fügezustand, um, in einem Fügeschritt, das Flächenmaterial (5) mit dem Behälter (3; 3') zu verbinden;
- Festhalten des Flächenmaterials (5) durch eine Haltevorrichtung (6) während des Verbindens und Schneidens;
wobei das Verfahren **dadurch gekennzeichnet ist, dass** es in dem Fügezustand folgende Schritt umfasst
- Fixierthalten der Schneidvorrichtung (401) relativ zu der Fügevorrichtung (402),
- Abschneiden des blattartigen Elements (2) von dem Flächenmaterial (5) auf der Schneidkante (403) durch Bewegen der Haltevorrichtung (6) aus einer Spannstellung in eine Schneidstellung während eines Schneideschrittes.

13. Verfahren nach Anspruch 12, und umfassend einen Schritt des Anordnens der Haltevorrichtung (6) in der Spannstellung, auf der Seite des Behälters (3; 3') in Bezug auf den Fügezustand, in einem Vorbereitungsschritt, um das Flächenmaterial (5) vor dem Schneideschritt weg von der Schneidkante (403) zu bewegen und um das Flächenmaterial (5) um eine Bodenwand (301; 301') des Behälters (3; 3') zu hüllen.

14. Verfahren nach Anspruch 12 oder 13, wobei das Bewegen der Haltevorrichtung (6) in Richtung der Schneidstellung umfasst, eine Fügestellung zu definieren, in der das Flächenmaterial (5) mit dem Behälter (3; 3') verbunden ist, das Flächenmaterial (5) von der Seite der Arbeitseinheit (4), relativ zur Fügestellung, zu bewegen, so dass die Haltevorrichtung (6) das Flächenmaterial (5) von der Seite des Behälters zur Arbeitseinheit (4) hin bewegt, um das Flächenmaterial (5) zu schneiden.

15. Verfahren nach einem der Ansprüche von 12 bis 14, und umfassend den Schritt des Anordnens der Haltevorrichtung (6) in einer Außerbetriebsstellung, um das Flächenmaterial (5) festzuhalten, das zwischen der Arbeitseinheit (4) und dem Behälter (3, 3') angeordnet ist, und des Bewegens der Haltevorrichtung (6) aus der Außerbetriebsstellung in die Spannstellung, wenn sich die Arbeitseinheit (4) und der Behälter (3, 3') in dem voneinander beabstandeten Zustand befinden.

16. Verfahren nach einem der Ansprüche von 12 bis 15, wobei das blattartige Element (2) ein Verschlusselement zum Verschließen einer Bodenwand (301; 301') einer becherförmigen Hülle einer Kapsel für Getränke ist und das Verfahren den Schritt des Verbindens des Flächenmaterials (5) mit einem Randbereich (302; 302') der Bodenwand (301; 301') umfasst, die insbesondere auf einer Ebene liegt, und des nachfolgenden Abschneidens des blattartigen Elements (2) von dem Flächenmaterial (5); und wobei das Verfahren optional einen Schritt umfasst, um das Flächenmaterial (5) auch mit einem inneren Bereich (303') der Bodenwand (301') zu verbinden, der auf einer weiteren Ebene liegt: oder wobei das blattartige Element (2) ein Abdeckelement zum Abdecken eines flanschförmigen Randes (305) einer becherförmigen Hülle einer Kapsel (3; 3') für Getränke ist und das Verfahren den Schritt des Verbindens des Flächenmaterials (5) mit dem flanschförmigen Rand (305) umfasst.

## Revendications

1. Un dispositif (1) de coupe et d'assemblage d'un élément en forme de feuille (2) à un récipient (3, 3'), le dispositif (1) comprenant :
- une unité opérationnelle (4) comprenant un dispositif de coupe (401) et un dispositif d'assemblage (402), où le dispositif de coupe (401) comprend un bord de coupe (403) qui entoure le dispositif d'assemblage (402) ; où
- l'unité opérationnelle (4) et le récipient (3, 3') sont mobiles l'un par rapport à l'autre le long d'un axe de déplacement (Z) entre une condition espacée, dans laquelle un matériau en feuille (5) est interposé entre eux et est espacé d'eux, et une condition d'assemblage, dans laquelle le dispositif d'assemblage (402) est configuré pour assembler le matériau en feuille (5) au récipient (3 ; 3') ; où le dispositif (1) comprend en outre :
- un dispositif de retenue (6), configuré pour retenir le matériau en feuille (5) pendant l'assemblage et la coupe ; et où le dispositif (1) est **caractérisé en ce que** dans la condition d'assemblage
- le dispositif de coupe (401) est configuré pour rester fixe par rapport au dispositif d'assemblage (402), et
- le dispositif de retenue (6) est configuré pour se déplacer le long de l'axe (Z) d'une position de tension à une position de coupe, l'élément en forme de feuille (2) étant coupé sur le bord de coupe (403) à partir du matériau en feuille (5) lors du déplacement du dispositif de retenue (6) de la position de tension à la position de coupe.

2. Le dispositif selon la revendication 1, dans lequel la position de tension est située le long de l'axe (Z) du côté du récipient (3, 3'), le matériau en feuille (5) étant éloigné du bord de coupe (403) vers le récipient (3, 3') dans la position de tension.

3. Le dispositif selon la revendication 2, dans lequel le récipient (3, 3') a une paroi de base (301, 301') à laquelle l'élément en forme de feuille (2) doit être assemblé, le dispositif de retenue (6) étant configuré pour envelopper le matériau en feuille (5) autour de la paroi de base (301 ; 301') lorsqu'il est dans la position de tension.

4. Le dispositif selon l'une des revendications de 1 à 3, dans lequel dans la condition d'assemblage une position d'assemblage est définie dans laquelle le matériau en feuille (5) est assemblé au récipient (3 ; 3'), et dans lequel la position de coupe est située le long de l'axe (Z) du côté de l'unité opérationnelle (4), la position d'assemblage étant interposée entre la position de tension et la position de coupe de manière à ce que le dispositif de retenue (6) déplace le matériau en feuille (5) du côté du récipient (3 ; 3') vers l'unité opérationnelle (4) afin de couper le matériau en feuille (5) et d'obtenir l'élément en forme de feuille (2) coupé.

5. Le dispositif selon l'une des revendications précédentes, dans lequel lorsque l'unité opérationnelle (4) et le récipient (3, 3') sont dans la condition espacée et avant que l'unité opérationnelle (4) et le récipient (3, 3') se déplacent dans la condition d'assemblage, le dispositif de retenue (6) est configuré pour se déplacer dans la position de tension depuis une position non opérationnelle, configurée pour retenir le matériau en feuille (5) interposé entre l'unité opérationnelle (4) et le récipient (3, 3') et espacé de ceux-ci.

6. Le dispositif selon l'une des revendications précédentes, dans lequel le dispositif de coupe (401) et le dispositif d'assemblage (402) sont configurés pour se déplacer solidairement entre la condition espacée et la condition d'assemblage.

7. Le dispositif selon l'une des revendications précédentes, dans lequel le dispositif de retenue (6) comprend une paire de plaques (601, 602) entourant l'unité opérationnelle (4) et le récipient (3), qui sont orientées l'une vers l'autre et, en particulier, sont annulaires ; et optionnellement dans lequel les plaques (601, 602) sont mobiles le long de l'axe (Z) entre une condition de retenue, dans laquelle elles sont rapprochées et sont configurées pour retenir le matériau en feuille (5) pendant l'étape d'assemblage et l'étape de coupe, et une condition éloignée dans laquelle elles sont espacées et le matériau en feuille (5) peut être avancé entre l'unité opérationnelle (4) et le récipient (3, 3').

8. Le dispositif selon l'une des revendications précédentes, dans lequel le dispositif d'assemblage (402) comprend un corps cylindrique (402a) et le dispositif de coupe (401) comprend un corps annulaire (401a) disposé concentriquement au corps cylindrique (402a).

9. Le dispositif selon la revendication 8, dans lequel le corps cylindrique (402a) comprend une extrémité de tête (404 ; 405) munie d'une zone extérieure (404' ; 405'), par exemple annulaire, et une zone intérieure (404" ; 405"), par exemple circulaire, qui est entourée par la zone extérieure (404' ; 405'), et est en retrait par rapport à la zone extérieure (404' ; 405'), dans lequel la zone extérieure (404' ; 405') est configurée pour assembler le matériau en feuille (5) à une région de bord (302 ; 302') de la paroi de base (301 ; 301') du récipient (3 ; 3'), qui est située sur un plan ; et optionnellement dans lequel le bord de coupe (403) dépasse de la zone extérieure (404' ; 405') d'une hauteur égale à une épaisseur du matériau en feuille (5) .

10. Le dispositif selon la revendication 9, dans lequel la zone intérieure (404") est conformée pour éviter d'assembler le matériau en feuille (5) à une région intérieure (303) de la paroi de base (301) du récipient (3).

11. Le dispositif selon la revendication 10, dans lequel la zone intérieure (405") est configurée pour assembler le matériau en feuille (5) à une région intérieure (303') de la paroi de base (301') du récipient (3'), qui est située sur un autre plan, dépassant par rapport audit plan ; et optionnellement dans lequel entre la zone extérieure (405') et la zone intérieure (405") l'extrémité de tête (405) comprend un renfoncement annulaire (405‴), plus en retrait par rapport à la zone intérieure (405"), qui est conformé pour éviter d'assembler le matériau en feuille (5) à la paroi de base (301') du récipient (3').

12. Un procédé de coupe et d'assemblage d'un élément en forme de feuille (2) à un récipient (3, 3'), qui comprend les étapes suivantes :
- prévoir une unité opérationnelle (4) comprenant un dispositif d'assemblage (402) et un dispositif de coupe (401), où le dispositif de coupe (401) comprend un bord de coupe (403) qui entoure le dispositif d'assemblage (402) ;
- déplacer l'unité opérationnelle (4) et le récipient (3) l'une par rapport à l'autre le long d'un axe de déplacement (Z) entre une condition espacée, afin d'interposer entre eux, espacé, le matériau en feuille (5), et une condition d'assemblage, afin d'assembler le matériau en feuille (5) au récipient (3 ; 3'), au cours d'une étape d'assemblage ;
- retenir le matériau en feuille (5) pendant l'assemblage et la coupe au moyen d'un dispositif de retenue (6) ; le procédé étant **caractérisé en ce que** dans la condition d'assemblage, il comprend l'étape consistant à
- maintenir le dispositif de coupe (401) fixe par rapport au dispositif d'assemblage (402),
- couper l'élément en forme de feuille (2) à partir du matériau en feuille (5) sur le bord de coupe (403) en déplaçant le dispositif de retenue (6) d'une position de tension à une position de coupe au cours d'une étape de coupe.

13. Le procédé selon la revendication 12, et comprenant une étape consistant à disposer le dispositif de retenue (6) dans la position de tension, du côté du récipient (3 ; 3') par rapport à la condition d'assemblage, au cours d'une étape de préparation, pour éloigner le matériau en feuille (5) du bord de coupe (403) avant l'étape de coupe et pour envelopper le matériau en feuille (5) autour d'une paroi de base (301 ; 301') du récipient (3 ; 3').

14. Le procédé selon la revendication 12 ou 13, dans lequel le déplacement du dispositif de retenue (6) vers la position de coupe comprend la définition d'une position d'assemblage dans laquelle le matériau en feuille (5) est assemblé au récipient (3 ; 3'), en déplaçant le matériau en feuille (5) depuis le côté de l'unité opérationnelle (4) par rapport à la position d'assemblage, de manière à ce que le dispositif de retenue (6) déplace le matériau en feuille (5) du côté du récipient vers l'unité opérationnelle (4), afin de couper le matériau en feuille (5).

15. Le procédé selon l'une des revendications de 12 à 14, et comprenant l'étape consistant à disposer le dispositif de retenue (6) dans une position non opérationnelle de manière à retenir le matériau en feuille (5) interposé entre l'unité opérationnelle (4) et le récipient (3, 3') et à déplacer le dispositif de retenue (6) de la position non opérationnelle à la position de tension lorsque l'unité opérationnelle (4) et le récipient (3, 3') sont dans la condition espacée.

16. Le procédé selon l'une des revendications de 12 à 15, dans lequel l'élément en forme de feuille (2) est un élément de fermeture pour fermer une paroi de base (301 ; 301') d'une enveloppe en forme de godet d'une capsule pour boissons et le procédé comprend l'étape consistant à assembler le matériau en feuille (5) à une région de bord (302 ; 302') de la paroi de base (301 ; 301'), en particulier située sur un plan et à couper ensuite l'élément en forme de feuille (2) à partir du matériau en feuille (5) ; et optionnellement dans lequel le procédé comprend une étape consistant à assembler le matériau en feuille (5) également à une région intérieure (303') de la paroi de base (301') située sur un autre plan ; ou dans lequel l'élément en forme de feuille (2) est un élément de couverture pour couvrir un bord à bride (305) d'une enveloppe en forme de godet d'une capsule (3 ; 3') pour boissons et le procédé comprend l'étape d'assemblage du matériau en feuille (5) au bord à bride (305).
